(19) Europäisches Patentamt
European Patent Office
Office européen des brevets

(11) Publication number: **0 273 095 B1**

# (12) EUROPEAN PATENT SPECIFICATION

(45) Date of publication of patent specification: **24.04.91** (51) Int. Cl.5: **F16L 11/16**

(21) Application number: **87107492.8**

(22) Date of filing: **22.05.87**

## (54) Flexible pipe.

(30) Priority: **26.12.86 JP 199495/86**

(43) Date of publication of application:
**06.07.88 Bulletin 88/27**

(45) Publication of the grant of the patent:
**24.04.91 Bulletin 91/17**

(84) Designated Contracting States:
**BE CH DE ES FR GB IT LI LU NL SE**

(56) References cited:
**AT-B- 22 313**
**DE-C- 925 506**
**US-A- 1 409 697**
**US-A- 2 784 010**
**US-A- 3 687 169**
**US-A- 4 403 631**
**DE-A- 2 161 597**
**FR-A- 2 513 346**
**US-A- 2 014 368**
**US-A- 3 311 133**
**US-A- 3 992 044**

(73) Proprietor: **Kanao, Shiro**
**No. 9-18, Nanpeidai 4-chome**
**Takatsuki-shi Osaka(JP)**

(72) Inventor: **Kanao, Shiro**
**No. 9-18, Nanpeidai 4-chome**
**Takatsuki-shi Osaka(JP)**

(74) Representative: **EGLI-EUROPEAN PATENT ATTORNEYS**
**Widenmayerstrasse 5**
**W-8000 München 22(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a flexible pipe in accordance with the prior art portion of claim 1.

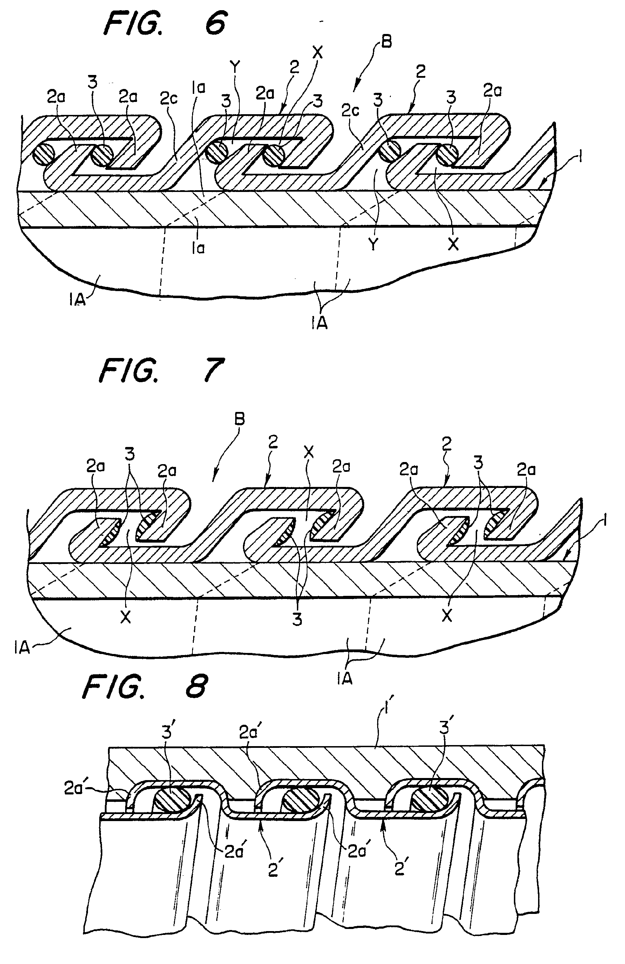

A conventional flexible pipe consists as shown in Fig. 8, of a corrugation 2' prepared from rigid metal material. The two ends 2a' of each corrugation 2 are perpendicularly bent in transverse cross section. Moreover, the corrugation 2' are wound onto the wall surface (inner wall surface in this case) of a flexible pipe 1' made of flexible material. The adjoining bent ends 2a' of the corrugations 2' thus wound and anchored together are movably engaged in the axial direction of the flexible pipe so that the pipe as a whole becomes flexible.

A flexible pipe of the above-mentioned kind is known from, for example, a pipe shown in Fig. 2 of US-A-3,311,133. The pipe shown in Fig. 3 of this reference is a modification of the pipe shown in Fig. 2 thereof.

The pipe in accordance with Fig. 3 of US-A-3,311,133 is slightly different from the Fig. 2 embodiment in that opposite ends of the metal belt are bent in an inwardly U-shape and that the elastomeric strand is provided in the first furrow. The end portions of the metal belt are bent in a U-shape so that a width allowing the movement thereof in the axial direction of the pipe is restricted. Therefore, a lateral width of the upper connecting portion and lateral width of the lower connecting portion is very large. The S-shaped belt and the jacket pipe are not fixed to each other so that a part of the jacket pipe is entered in the first furrow to limit the movement thereof in an axial direction. If the part of the jacket is not entered into the first furrow, the pipe cannot keep a predetermined shape. In addition, the part of the jacket is entered in the furrow thus reducing the flexibility of the belt and obstructing a contractive movement of the belt.

Furthermore, the use of the elastomeric strand is required for making the pipe water-tight. If the outer surface of the metal is not covered by the jacket pipe, the water-tight nature of the pipe is not kept. When the inner surface of the pipe is subjected to an inner pressure, the inner pressure passed through the strand and is received by the surface of the jacket pipe. Therefore, it is necessary to make the jacket thick enough so that the jacket is resistent against the inner pressure. The metal belt is provided inside the pipe so that a fluid of chemicals melting or corroding a metal cannot be transported. The prior art pipe is difficult to manufacture as it is difficult to form the U-shape portion at the end portions due to the fact that the pipe is made of metal. The material of the belt and the jacket must be selected such that the material can resist against a fluid to be transported as the fluid reaches the jacket through the S-shaped belt layer.

In the aforesaid conventional flexible pipe, both ends 2a' of the corrugation are perpendicularly bent and the direction in which the ends thereof are bent conforms to the diametric direction of the flexible pipe 1' after the corrugations 2' are wound onto the wall surface of the flexible pipe 1' into a flexible pipe. When great bending stress is applied to the flexible pipe, the bent ends 2a' are therefore caused to move in the diametric direction of the pipe and both the ends 2a' engaged with each other tend to easily disengage. The problem is that such a flexible pipe can crack.

Although an attempt has been made to solve the aforesaid problem by spirally inserting a cord or the like in between the two bent ends 2a' engaged with each other, that problem is still left unsolved.

In view of this prior art, the present invention is based on the object of providing a flexible pipe of the abovementioned type having an improved mechanical and chemical resistancy and a structure allowing a simple large scale series manufacturing.

This object is achieved by a flexible pipe in accordance with the prior art portion of claim 1 having the features indicated in the characterizing portion of claim 1.

In the flexible pipe according to the present invention, since the ends of each corrugation are bent at an acute angle, the bent ends are kept engaged even if the bent ends are forced to move in the axial direction of the flexible pipe because of great bending stress applied thereto. The bent ends are prevented from moving in the axial direction of the flexible pipe so that they are disengaged only with great difficulty.

Consequently, the flexible pipe according to the present invention is resistant to great applied bending stress and the crack arresting structure helps improve its quality.

## BRIEF DESCRIPTION OF THE DRAWINGS

Figs. 1 through 7 shows flexible pipes embodying the present invention:

Fig. 1 is a partial sectional side view;

Fig. 2 is an enlarged view of the principal part;

Fig. 3 through 7 are enlarged sectional views of the principal part of still another embodiment;

Fig. 8 is an enlarged sectional view of a conventional flexible pipe.

## DETAILED DESCRIPTION OF THE PREFERRED EMBODIMENTS

Referring now to the drawings, embodiments of the present invention will be described.

As shown in Figs. 1 and 2, one or more flexible plastic flat bands 1A are spirally wound into a flexible pipe 1. The two adjoining side edges 1a of the flat bands 1A thus wound are coupled and integrally fusion welded (anchored) to form a spiral pipe.

A corrugated belt or band 2 made of rigid plastics (e.g., plastics of PVC) is spirally wound onto the outer wall surface of the aforesaid inner flexible pipe 1. Each corrugated band 2, roughly S-shaped in transverse cross section, has two parallel bent ends 2a pointed opposite to each other and inclined at an acute angle. The two adjoining bent ends 2a of each corrugated band 2 thus wound onto the outer wall surface of the flexible pipe 1 are engaged with a gap X (Fig. 2) therebetween in the axial direction of the flexible pipe 1. Thereby the bent ends of the corrugated bands 2 are movably and integrally coupled in their axial direction to form a rigid flexible pipe B. Moreover, each corrugated band 2 is partly in contact with the outer wall surface of the inner flexible pipe 1 and that portion in contact therewith is fusion welded (anchored) to the wall surface thereof.

In this flexible pipe according to the present invention, since the two ends 2a of each corrugated band 2 are bent at an acute angle, the bent ends 2a are kept engaged even if great bending stress is applied and are hardly disengaged because their bent ends 2a catch each other.

Several additional embodiments will now be described. In a first additional embodiment, a flexible plastic cord 3 is, as shown in Figs. 3 or 4, inserted into each gap X where the adjoining bent ends 2a of the aforesaid corrugated band 2 engage with each other to form the rigid flexible pipe B to further ensure that the bent ends 2a of the corrugated bands 2 are prevented from disengaging. The cord 3 may be circular in cross section to only partially fill the gap X (see Fig. 3) or may be oval in cross section so that no gap X is left (see Fig. 4). However, the oval cross section is superior to the circular cross section in resistance to cracking at the time of bending deformation. Although no gap X is left in the case of the oval cross section, the bent ends 2a are needless to say allowed to move in the axial direction of the flexible pipe because the cord 3 is flexible. Moreover, the resistance to cracking at the time of bending deformation will be further improved provided the cord 3 and the bent ends 2a are totally or partially bonded.

As shown in Fig. 7, a pair of flexible plastic cords may be inserted into the gap X. More specifically, the pair of cords 3 are roughly crescent in cross section and one side of the crescent is attached to each bent end 2a.

In a second additional embodiment, as shown in Fig. 5, the aforesaid rigid flexible pipe B may instead have the cord 3 in the gap between the intermediate portion 2c of the S-shaped corrugated belt and the bent end 2a adjacent to the intermediate portion.

In the third additional embodiment, the aforesaid rigid flexible pipe B may have two cords 3 in both the gaps X and Y as shown in Fig. 6.

Use can be made of fiber reinforced plastics, fiber reinforced metals, fiber reinforced rubber, rigid rubber and metals other than the aforesaid rigid plastics: e.g., rigid polyolefin plastics, rigid PVC plastics, etc. as rigid material for the corrugated belt.

Also, the flexible material for the flexible pipe 1 and the cord 3 is not limited to the aforesaid flexible plastics.

Although reference numerals are employed in claims of the present application to facilitate reference to the accompanying drawings, the present invention is not limited to the construction shown in the drawings.

## Claims

**1.** A flexible pipe comprising:

a flexible solid pipe (1) made of resin material having flexibility;

a rigid flexible layer (B) formed by at least one belt (2) roughly S-shaped in transverse cross-section, helically wound and firmly fixed onto a surface of said flexible pipe (1),

wherein each belt has a central portion (2c), two intermediate portions offset from each other in a radial direction, provided in parallel with an axial direction thereof and connected to the opposite ends of said central portion (2c), respectively, and end portions (2a, 2a) pointed opposite to each other, bent in parallel with each other and connected to said two intermediate portions, respectively,

characterized in that

- said flexible solid pipe (1) forms an inner portion and said rigid flexible layer (B) forms an outer portion of said flexible pipe (1),
- said rigid flexible layer is fixed onto the outer surface of said flexible pipe (1),
- said belt (2) is made of hard resin material,
- said central portion (2c) is inclined with respect to the axis of the inner pipe (1) in transverse cross-section,
- said end portions (2a, 2a) are bent radially toward each other at acute angles relative to said intermediate portions of said belt, said end portion (2a, 2a) are in parallel with said central portion (2c),
- one of said intermediate portions which is proximate to the outer surface of said inner flexible solid pipe (1) is fused to and conforms to the the outer surface of said inner pipe (1), and
- said bent ends of said at least one outer belt, at adjacent turns, are adjoining and are engaged such that said adjoining bent ends form spaces therebetween allowing the belt to be displaced in the axial direction of the inner flexible solid pipe.

**2.** A flexible pipe as claimed in claim 1, characterized in that said rigid flexible layer (B) includes a cord (3) inserted between the adjoining bent ends (2a, 2a) of said belts thus wound on said solid pipe.

**3.** A flexible pipe as claimed in claim 1 or 2, characterized in that said rigid flexible layer (B) includes a cord (3) between a central portion (2c) between said intermediate portions of said S-shaped belt (2), the bent end (2a) adjacent to the central portion (2c) and the solid pipe.

**4.** A flexible pipe as claimed in one of the claims 1 to 3, characterized in that said rigid flexible layer (B) includes cords (3), (3) both between the adjoining bent ends (2a, 2a) of said belt thus wound onto said flexible solid pipe (1) and between a central portion (2c) between said intermediate portion of said S-shaped belt (2) thus wound, said bent end (2a) and said solid pipe.

**5.** A flexible pipe as claimed in claim 1, characterized in that said rigid flexible layer (B) includes a pair of cords (3), (3) adhered on surfaces of said adjoining bent ends of the belts, respectively, and said surfaces face each other.

**6.** A flexible pipe as claimed in claim 5, characterized in that said pair of cords (3), (3) are roughly crescent in a cross-section along said axial direction.

## Revendications

**1.** Un tuyau flexible comprenant:
- un tuyau flexible rigide (1) réalisé en un matériau à base de résine présentant de la flexibilité;
- une couche flexible rigide (B) formée d'au moins une ceinture (2) présentant en gros, en coupe transversale, une forme en S, bobinée hélicoïdalement et rigidement fixée sur une surface dudit tuyau flexible (1), dans lequel chaque ceinture présente une partie centrale (2c), deux parties intermédiaires décalées l'une par rapport à l'autre dans une direction radiale, prévues en parallèle dans leur direction axiale et reliées respectivement aux extrémités opposées de ladite partie centrale (2c), et des parties d'extrémités (2a, 2a) dirigées dans des directions opposées l'une par rapport à l'autre, cambrées parallèlement l'une à l'autre et reliées respectivement auxdites parties intermédiaires,

caractérisé en ce que:
- ledit tuyau flexible rigide (1) forme une partie intérieure et ladite couche flexible rigide (B) forme une partie extérieure dudit tuyau flexible (1);
- ladite couche flexible rigide est fixée sur la surface extérieure dudit tuyau flexible (1);
- ladite ceinture (2) est réalisée en matériau à base de résine dure;
- ladite partie centrale (2c) est inclinée par rapport à l'axe du tuyau intérieur (1) en section transversale;
- lesdites parties d'extrémité (2a, 2a) sont pliées radialement l'ùne vers l'autre selon des angles aigus par rapport auxdites parties intermédiaires de ladite ceinture, lesdites parties d'extrémité (2a, 2a) sont parallèles à ladite partie centrale (2c);
- l'une desdites parties intermédiaires qui est située à proximité de la surface extérieure dudit tuyau flexible intérieur rigide (1) est soudée par fusion et se conforme à la surface extérieure dudit tuyau intérieur (1); et
- lesdites extrémités pliées d'au moins ladite ceinture extérieure, sur des tours adjacents, sont jointives et sont en contact, de telle façon que lesdites extrémités pliées jointives forment entre elles des espaces permettant à la ceinture d'être déplacée dans la direction axiale du tuyau flexible rigide intérieur.

**2.** Un tuyau flexible selon la revendication 1, caractérisé en ce que ladite couche flexible rigide (B) comporte un cordon (3) inséré entre les extrémités pliées jointives (2a, 2a) desdites ceintures et qui sont ainsi bobinées sur ledit tuyau rigide.

**3.** Un tuyau flexible selon la revendication 1 ou 2, caractérisé en ce que ladite couche flexible rigide (B) comporte un cordon (3) entre une partie centrale (2c) entre lesdites parties intermédiaires de ladite ceinture en forme de S (2), l'extrémité pliée (2a) adjacente à la partie centrale (2c) et le tuyau rigide.

**4.** Un tuyau flexible selon l'une des revendications 1 à 3, caractérisé en ce que ladite couche flexible rigide (B) comporte des cordons (3, 3) qui sont situés tous les deux entre les extrémités pliées jointives (2a, 2a) de ladite ceinture ainsi bobinée sur ledit tuyau flexible rigide (1) et entre une partie centrale (2c) entre ladite partie intermédiaire de ladite ceinture en forme de S (2) ainsi bobinée, ladite extrémité pliée (2a) et ledit tuyau rigide.

**5.** Un tuyau flexible selon la revendication 1, caractérisé en ce que ladite couche flexible rigide (B) comporte deux cordons (3, 3) qui adhèrent respectivement sur des surfaces desdites extrémités pliées jointives des ceintures et sur lesdites surfaces qui se font face.

**6.** Un tuyau flexible selon la revendication 5, caractérisé en ce que lesdits deux cordons (3, 3) présentent une forme sensiblement en lunule en section transversale le long de ladite direction axiale.

## Ansprüche

**1.** Flexibles Rohr mit:
- einem flexiblen, festen Rohr (1), hergestellt aus einem flexiblen Kunstharz-(Kunststoff-) Material,
- einer flexiblen festen Schicht (B), geformt aus zumindest einem in Längsschnitt annähernd S-förmigen Gurt (2), der schraubenförmig aufgewickelt und fest auf einer Oberfläche des flexiblen Rohres (1) arretiert ist,

  wobei jeder Gurt einen Mittelabschnitt (2c) aufweist, zwei zueinander in Radialrichtung versetzte Zwischenabschnitte, die parallel zur Axialrichtung verlaufen und jeweils an die entgegengesetzten Enden des Mittelabschnittes (2c) angeschlossen sind, und Endabschnitte (2a, 2a), die jeweils entgegengesetzt zueinander ausgerichtet, parallel zueinander gebogen und jeweils an die zwei Zwischenabschnitte angeschlossen sind,

  dadurch gekennzeichnet, daß
- das flexible, feste Rohr (1) einen inneren Abschnitt und die flexible, feste Schicht (B) einen äußeren Abschnitt des flexiblen Rohres (1) bildet,
- die flexible, feste Schicht auf der äußeren Oberfläche des flexiblen Rohres (1) befestigt ist,
- der Gurt (2) aus hartem Kunstharz-(Kunststoff-) Material hergestellt ist,
- der Mittelabschnitt (2c) in Bezug auf die Achse des inneren Rohres (1) in Längsschnitt schräg geneigt ist,
- die Endabschnitte (2a, 2a) radial zueinander in spitzen Winkeln in Bezug auf die Zwischenabschnitte des Gurtes umgebogen sind, wobei Endabschnitte (2a, 2a) parallel zu den Mittelabschnitten (2c) verlaufen,
- einer der Zwischenabschnitte, und zwar der, der der äußeren Oberfläche des inneren flexiblen festen Rohres (1) am nächsten ist, auf die äußere Oberfläche des inneren Rohres (1) aufgeschmolzen und aufgepaßt ist, und
- die umgebogenen Enden von zumindest einem äußeren Gurt bei aneinandergrenzenden Windungen so ineinander greifen, daß aneinandergrenzende umgebogene Enden Zwischenräume formen, die es dem Gurt erlauben, in der axialen Richtung des inneren flexiblen festen Gurtes verschoben zu werden.

**2.** Flexibles Rohr nach Anspruch 1, dadurch gekennzeichnet, daß die flexible feste Schicht (B) eine Schnur (3) umfaßt, die zwischen die aneinander grenzenden umgebogenen Enden (2a, 2a) des Gurtes gelegt und so über das feste Rohr gewickelt ist.

**3.** Flexibles Rohr nach Anspruch 1 oder 2, dadurch gekennzeichnet, daß die flexible feste Schicht (B) eine Schnur (3) zwischen einem Mittelabschnitt (2c) zwischen den Zwischenabschnitten des S-förmigen Gurtes (2) umfaßt, wobei das umgebogene Ende (2a) an den Mittelabschnitt (2c) und das feste Rohr angrenzt.

**4.** Flexibles Rohr nach einem der Ansprüche 1 bis 3, dadurch gekennzeichnet, daß die flexible feste Schicht (B) Schnüre (3), (3) umfaßt, beide zwischen die aneinandergrenzenden umgebogenen Enden (2a, 2a) des Gurtes gelegt, so über das flexible feste Rohr (1) gewickelt und so zwischen einem Mittelabschnitt (2c) zwischen den Zwischenabschnitten des S-förmigen Gurtes (2) gewickelt, das Gurtende (2a) und das feste Rohr.

5. Flexibles Rohr nach Anspruch 1, dadurch gekennzeichnet, daß die flexible feste Schicht (B) ein Paar Schnüre (3), (3) umfaßt, die jeweils auf Oberflächen der aneinandergrenzenden umgebogenen Enden der Gurte aufgeklebt sind, und deren Oberflächen einander gegenüberliegen.

6. Flexibles Rohr nach Anspruch 5, dadurch gekennzeichnet, daß die beiden Schnüre (3), (3) in Längsschnitt annähernd kreisabschnittförmig sind.

FIG. 1

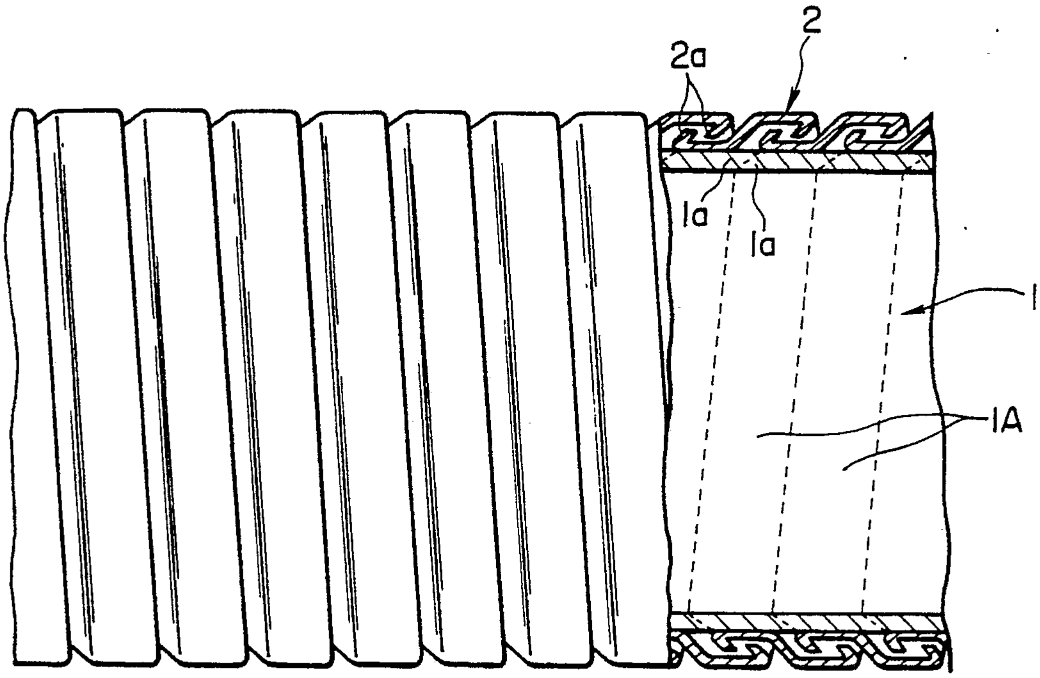


FIG. 2

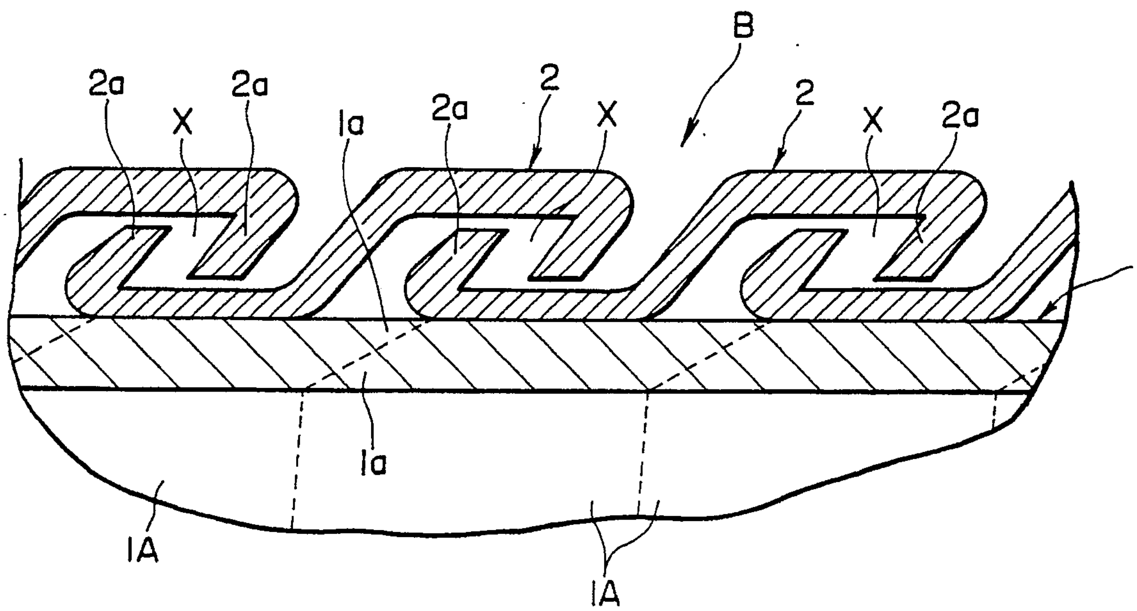

FIG. 3

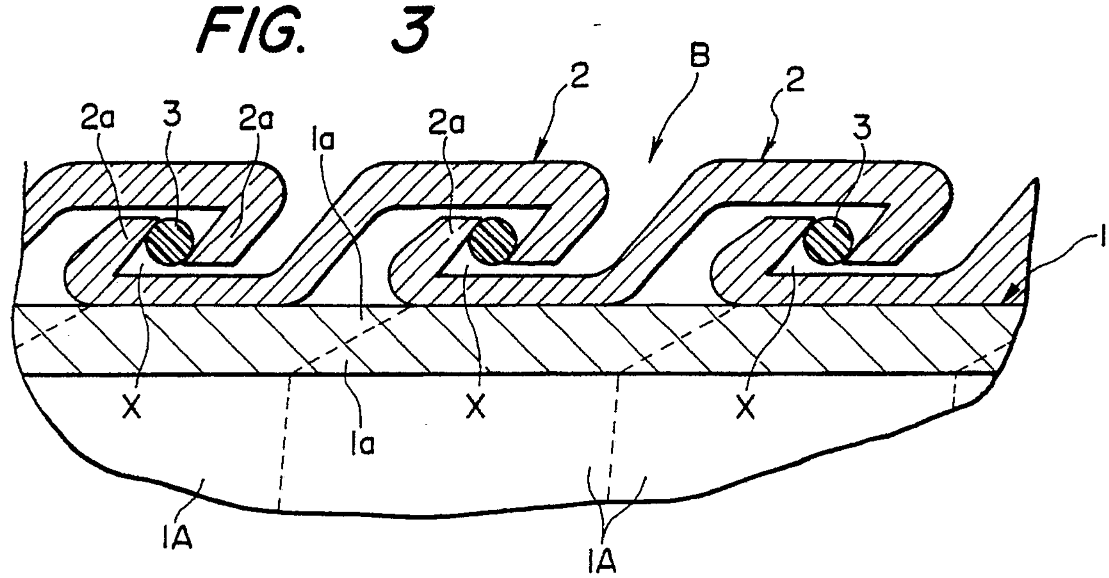


FIG. 4

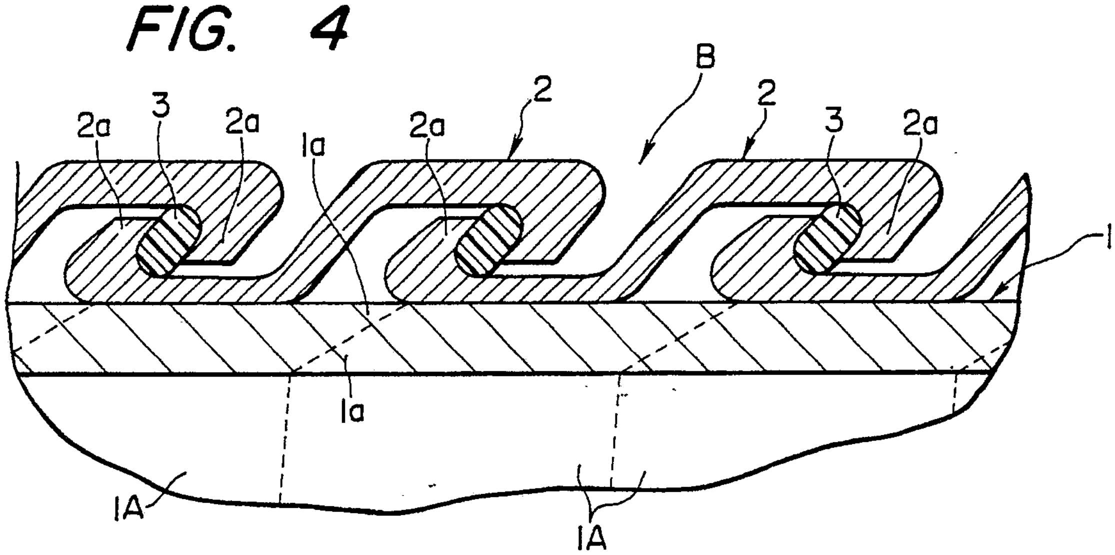


FIG. 5

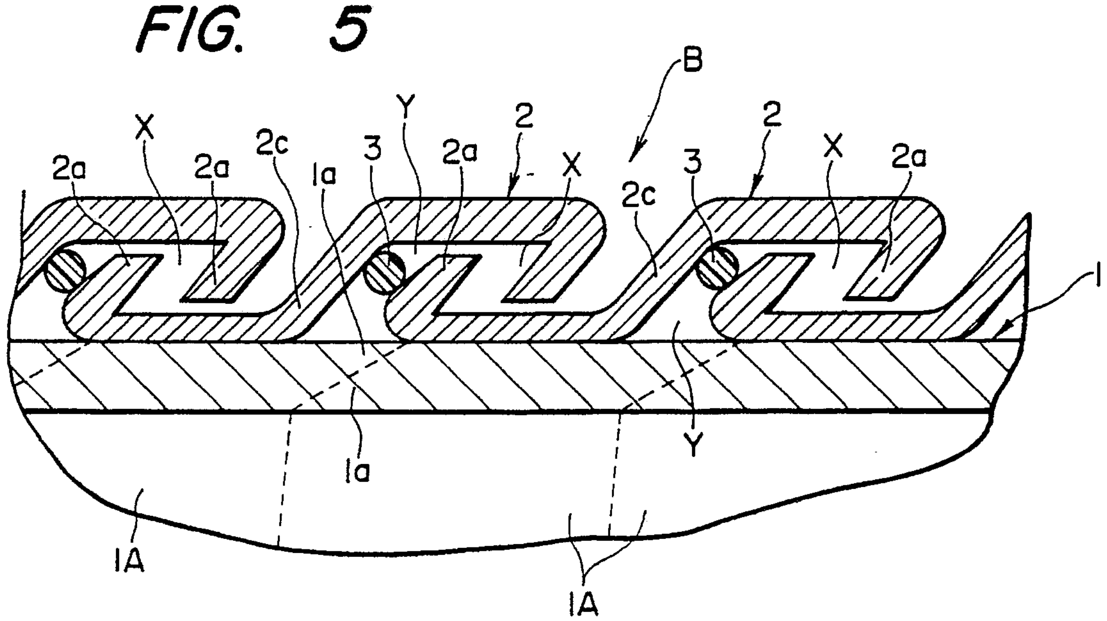

FIG. 6

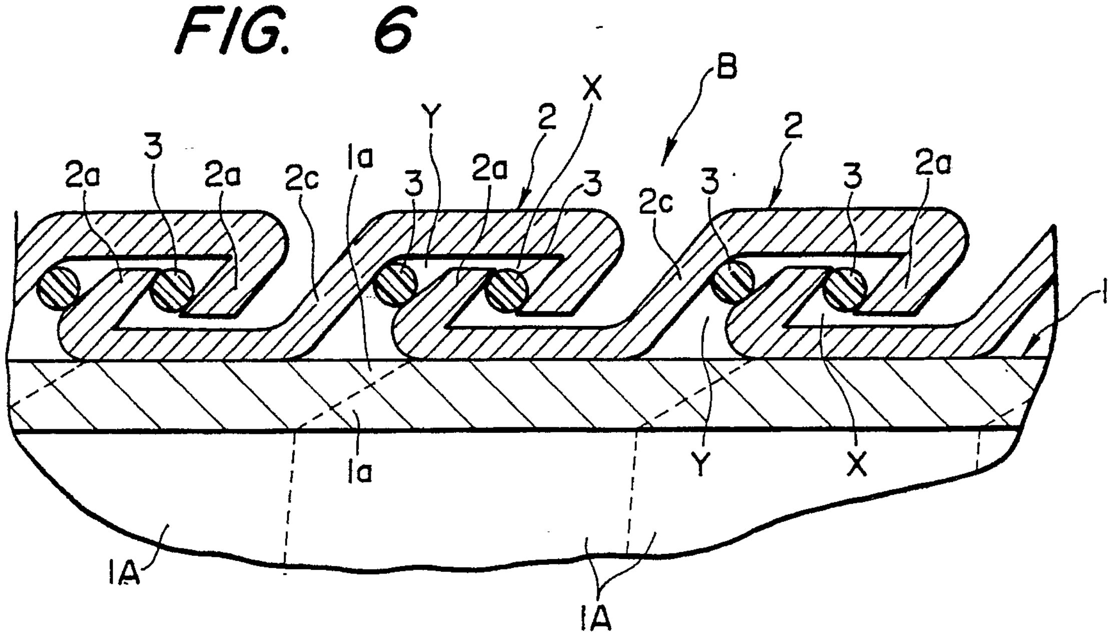


FIG. 7

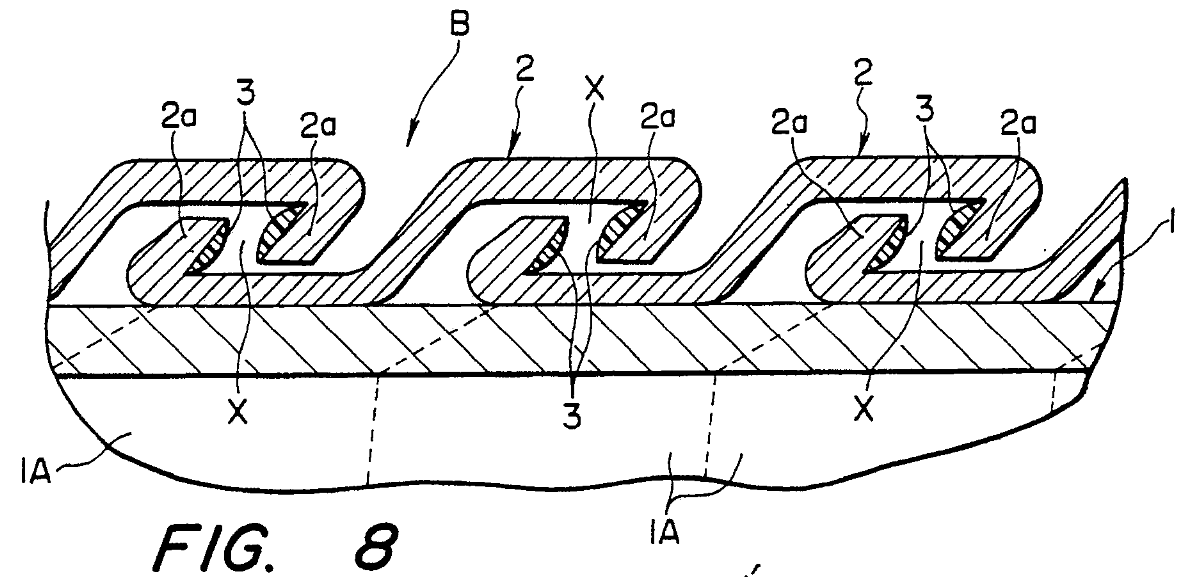


FIG. 8